Europäisches Patentamt

European Patent Office

Office européen des brevets

(19)

(11) Publication number: **0 462 681 A1**

## (12) EUROPEAN PATENT APPLICATION

(21) Application number: **91202170.6**

(51) Int. Cl.⁵: **C01B 33/34**

(22) Date of filing: **17.10.86**

This application was filed on 26.08.1991 as a divisional application to the application mentioned under INID code 60.

(30) Priority: **21.10.85 US 789609**

(43) Date of publication of application:
**27.12.91 Bulletin 91/52**

(84) Designated Contracting States:
**BE DE FR GB IT NL SE**

(60) Publication number of the earlier application in accordance with Art. 76 EPC: **0 220 893**

(71) Applicant: **MOBIL OIL CORPORATION**
**3225 Gallows Road**
**Fairfax, Virginia 22037-0001 (US)**

(72) Inventor: **Klocke, Donald Joseph**
**209 Roberts Drive**
**Somerdale, New Jersey 08083 (US)**
Inventor: **Vartuli, James Clarke**
**320 Ponds Edge Road**
**West Chester, Pennsylvania 19380 (US)**
Inventor: **Kirker, Garry Wayne**
**18 Old Mill Road**
**Sewell, New Jersey (US)**

(74) Representative: **Colmer, Stephen Gary et al**
**Patent Department c/o Mobil Services**
**Company Limited Mobil Court 3 Clements Inn**
**London WC2A 2EB (GB)**

(54) **Synthesis of zeolite ZSM-23.**

(57)    A method of synthesizing ZSM-23 involves crystallization of a reaction mixture containing an organic directing agent and in addition an alcohol or diol having 1 to 6 carbon atoms.

EP 0 462 681 A1

The invention is directed to the synthesis of zeolite ZSM-23.

ZSM-23 and its synthesis are described in U.S. Patent Nos. 4,076,842 and 4,104,151.

The present invention is concerned with the synthesis of ZSM-23 at lower temperatures and with a smaller crystallite size than can be achieved by conventional techniques.

Accordingly, the invention resides in a method of synthesizing ZSM-23 comprising the steps of producing a reaction mixture suitable for crystallization of the required zeolite and containing an organic directing agent and then maintaining the reaction mixture under conditions such that said zeolite crystallizes, characterized in that said reaction mixture contains an alcohol or diol having 1 to 6 carbon atoms in addition to said directing agent.

Preferably, said conditions include a temperature below 150°C.

ZSM-23 and its characterizing X-ray diffraction pattern are described in U.S. Patent Nos. 4,076,842 and 4,104,151. As indicated in these patents, ZSM-23 is conventionally synthesized from an aqueous reaction mixture containing sources of an alkali metal oxide, preferably sodium oxide, a nitrogen-containing cation, preferably pyrrolidine, an oxide of silicon and optionally an oxide of aluminum. Preferably the reaction mixture has the following composition, in terms of mole ratios and having a composition, in terms of mole ratios of oxides, falling within the following ranges:

| | |
|---|---|
| $R^+/(R^+ + M^+)$ | 0.25 – 0.95 |
| $OH^-/SiO_2$ | 0.01 – 0.5 |
| $H_2O/OH^-$ | 100 – 1000 |
| $SiO_2/Al_2O_3$ | 12 – 1000 |

wherein R is an organic nitrogen-containing cation, preferably pyrrolidine, and M is an alkali metal ion. Conventional crystallization conditions include a temperature of 121-210°C (250-410°F), preferably 149-191°C (300-375°F), for a period of time of from 10 hours to 14 days, preferably 16-100 hours, and the resultant crystals have a size of 2-4 micron.

According to the present invention, it has now been found that ZSM-23 with a crystal size equal to or less than 1 micron, typically 0.2-1 micron, can be obtained by including an alcohol or diol having 1-6 carbon atoms in the conventional reaction mixtures described above. Suitable alcohols or diols include methanol, ethanol, propanol, isopropanol, glycol, 1,2 propylene glycol, 1,3 propylene glycol and mixtures thereof. The amount of alcohol or diol can range from about 2 to 60% based on the total synthesis mixture weight; although preferably the amount of alcohol or diol is from 2 to 4%, based on the total synthesis mixture weight. It is to be noted that alcohol or diol addition to the crystallization reaction mixture may be made alone or in conjunction with the addition of seed crystals of the zeolite sought to be produced.

The crystallization conditions employed in the present process include elevated temperatures at autogenous pressures, with or without stirring, for a period of time ranging from 5 to 300 hours, until crystallization of the product zeolite results. Crystallization can be conducted at conventional temperatures, namely from 80 to 210°C (176 to 410°F), preferably 130°C to 210°C (266° to 410°F). However, it is found that if crystallization can be effected at or below 150°C, that is 80° to 150°C, preferably 130° to 150°C, crystallization occurs without the formation of the significant amounts of ZSM-5 impurity normally produced if ZSM-23 is crystallized at such low temperature. In addition, it is found that the crystallite size of ZSM-23 produced decreases as the crystallization temperature is decreased.

The ZSM-23 produced by the present process exhibits utility in various hydrocarbon conversions, for example, in polymerization, aromatization, cracking, isomerization and hydrodewaxing. Illustrative process parameters in hydrocarbon conversion processes include temperatures ranging from 290° to 650°C, 0.1 to 50 WHSV and pressures ranging from 102 to 5620 kPa (0.1 to 800 psig). The hydrogen form of the zeolite, useful in such hydrocarbon conversion processes, and disproportionation of alkyl aromatics, is prepared, for example, by base exchanging the sodium form with, e.g., ammonium chloride or hydroxide whereby the ammonium ion is substituted for the sodium ion. The composition is then calcined at a temperature of, e.g., 1000°F (about 540°C) causing evolution of ammonia and retention of hydrogen in the composition. Other suitable replacing cations include cations of the metals of the Periodic Table, particularly metals other than sodium, most preferably metals of Group IIA, e.g., zinc, and Groups IIIA, IVA, IB, IIB, IIIB, IVB, VIB and Group VIII of the Periodic Table, and rare earth metals and manganese.

The invention will now be more particularly described with reference to the following Examples.

2

## Example 1 (Comparative)

A solution was prepared by mixing one part (by weight) aluminum sulfate, 3 parts sodium hydroxide (50% by weight), 4 parts sodium chloride, and 56 parts water. This solution was combined with a second solution composed of 26 parts PPG HiSil 233 (an amorphous silica) and 99 parts water. Eight parts pyrrolidine and 1 part ZSM-23 seeds (prepared by a previous batch) were then added and the combined solution was agitated vigorously for approximately one-half hour. The mixture was added to an autoclave, heated to 160°C(320°F) with constant stirring, and maintained at this temperature for 88 days. The resultant crystalline material was then filtered and washed on a Buchner funnel and then dried overnight at 121°C(250°F). The x-ray diffraction analysis indicated that this material was ZSM-23. The crystal size was 1-5 micron.

## Example 2

The preceding Example was repeated but with the HiSil content increased to 27 parts by weight, the water content increased to 158 parts by weight and 6 parts by weight of a 90 wt. % ethanol/10 wt.% methanol mixture being added with the pyrrolidine and ZSM-23 seeds. In this case crystallization at 160°C was effected in only 24 hours and the resultant crystals had a size of 0.5-1 micron.

## Example 3

The procedure of Example 2 was repeated but with the composition of the reaction mixture being adjusted or shown in Table 1. In particular, it will be noted that the alcohol employed in this case was ethanol alone and crystallizaton was effected at 143°C(290°F) for 66 hours and the crystallite size was reduced to 0.1-0.5 micron.

## Example 4 (Comparative)

The procedure of Example 1 was repeated (no alcohol present and total water decreased from 155 to 154 parts by weight) but the crystallization was effected at 143°C (290°F) for 48 hours. However, X-ray diffraction analysis indicated that the resultant zeolite was ZSM-5.

## Example 5 (Comparative)

Example 4 was repeated but with the pyrrolodine content doubled to 16 parts by weight and the water content being 157 parts by weight. Again crystallization at 143°C (290°F) for 66 hours yielded ZSM-5.

## Examples 6-14

In these Examples the effect of carrying the composition on the reaction mixture and particularly to alcohol or diol were investigated, particularly when using crystallization temperatures below 150°C. The results are give in Table I, which also tests the results of Examples 1-5. From the Table it will be seen that the addition of ethanol in Examples 6 and 7 produced ZSM-23 at two different $SiO_2/Al_2O_3$. In Example 8, a combination of ZSM-5 and ZSM-23 was produced. Examples 9 and 10 indicate that isopropanol was more successful in aiding the synthesis of ZSM-23 at the lower crystallization temperature than n-propanol. It is assumed that these results can be explained in terms of the stability and influence of the ionic form of the alcohol which may be present under reaction conditions. This assumption is supported by the production of ZSM-23 using glycol as shown in Examples 12-14.

3

Table I

Reactant Ratios (By Weight)

| Ex. | Aluminum Sulfate | HiSil 233 | Sodium Hydroxide[1] | Sodium Chloride[2] | Water | Pyrrolidine | Co-Organic | Name | Seeds | Synthesis Temp °F(°C) | Synthesis Time Hours | Resultant Zeolite[4] |
|---|---|---|---|---|---|---|---|---|---|---|---|---|
| 1 | 1 | 26 | 3 | 4 | 155 | 8 | - | - | 1 | 320(160) | 88 | ZSM-23 |
| 2 | 1 | 27 | 3 | 4 | 158 | 8 | 6 | Ethanol Mixture[3] | 1 | 320(160) | 24 | ZSM-23 |
| 3 | 1 | 14 | 2 | 2 | 85 | 4 | 3 | Ethanol | 1 | 290(143) | 66 | ZSM-23 |
| 4 | 1 | 26 | 3 | 4 | 154 | 8 | - | - | 1 | 290(143) | 48 | ZSM-5 |
| 5 | 1 | 26 | 3 | 4 | 157 | 16 | - | - | 1 | 290(143) | 66 | ZSM-5 |
| 6 | 1 | 26 | 3 | 4 | 153 | 8 | 6 | Ethanol | 1 | 290(143) | 112 | ZSM-23 |
| 7 | 1 | 14 | 2 | 2 | 84 | 4 | 3 | Ethanol | 1 | 290(143) | 112 | ZSM-23 |
| 8 | 1 | 26 | 3 | - | 153 | 8 | 6 | Ethanol | 1 | 290(143) | 160 | ZSM-5+ ZSM-23 |
| 9 | 1 | 26 | 3 | 4 | 153 | 8 | 8 | n-Propanol | 1 | 290(143) | 66 | ZSM-5+ ZSM-23 |
| 10 | 1 | 26 | 3 | 4 | 153 | 8 | 8 | Isopropanol | 1 | 290(143) | 88 | ZSM-23 |
| 11 | 1 | 26 | 3 | 4 | 153 | 8 | 6 | Ethanol | 1 | 320(160) | 16 | ZSM-23 |
| 12 | 1 | 27 | 3 | 4 | 158 | 8 | 9 | 1,2 Ethanediol | 1 | 320(160) | 24 | ZSM-23 |
| 13 | 1 | 14 | 2 | 2 | 85 | 4 | 5 | 1,2 Ethanediol | 1 | 290(143) | 96 | ZSM-23 |
| 14 | 1 | 27 | 3 | 4 | 158 | 8 | 9 | 1,2 Ethanediol | 1 | 290(143) | 108 | ZSM-23 |

[1] 50% by weight solution.

[2] Sodium chloride added in addition to that present in HiSil.

[3] Ethanol Mixture - 90% Ethanol - 10% Methanol by weight.

[4] As determined by x-ray diffraction.

EP 0 462 681 A1

**Claims**

1. A method of synthesizing or ZSM-23 comprising the steps of producing a reaction mixture suitable for crystallization of the required zeolite and containing an organic directing agent and then maintaining the reaction mixture under conditions such that said zeolite crystallizes, characterized in that said reaction mixture contains an alcohol or diol having 1 to 6 carbon atoms in addition to said directing agent.

2. The method of claim 1, wherein said reaction mixture contains seeds of said zeolite.

3. The method of claim 1 or claim 2, wherein the amount of alcohol or diol present in the reaction mixture comprises from 2 to 60 of the total weight of the mixture.

4. The method of claim 3, wherein the amount of alcohol or diol present in the reaction mixture comprises from 2 to 4 percent of the total weight of the mixture.

5. The method of any preceding claim wherein the crystallization is effected at 80-150°C.

6. The method of any preceding claim wherein the crystallization is effected at 130-150°C.

7. The method of any preceding claim wherein the organic directing agent is pyrrolidine.

**European Patent Office**

# EUROPEAN SEARCH REPORT

Application Number

EP 91 20 2170

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 076 842 (C.J. PLANK et al.) ----- | | C 01 B 33/34 |
| | | | |
| | | | **TECHNICAL FIELDS SEARCHED (Int. Cl.4)** |
| | | | C 01 B 33/00 |

The present search report has been drawn up for all claims

| Place of search | Date of completion of the search | Examiner |
|---|---|---|
| THE HAGUE | 30-09-1991 | BREBION J.CH. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)